# EUROPÄISCHE PATENTSCHRIFT

(11) **EP 4 228 415 B1**
(45) Veröffentlichungstag und Bekanntmachung des Hinweises auf die Patenterteilung: **13.11.2024**
(21) Anmeldenummer: 20796529.4
(22) Anmeldetag: 19.10.2020
(51) Int. Cl.: A22C 21/00

(54) **VORRICHTUNG UND VERFAHREN ZUR BEARBEITUNG VON GEFLÜGELSCHLACHTKÖRPERN**
APPARATUS AND METHOD FOR PROCESSING POULTRY CARCASSES
DISPOSITIF ET PROCÉDÉ DE TRAITEMENT DE CARCASSES DE VOLAILLES

(43) Veröffentlichungstag der Anmeldung: 23.08.2023
(73) Patentinhaber: Baader Poultry Holding GmbH, 23560 Lübeck (DE)
(72) Erfinder: VEEN, Tim Andries, 6983 BM Doesburg (NL); ZEËN, Jacobus, 6983 BM Doesburg (NL)
(74) Vertreter: Stork Bamberger Patentanwälte PartmbB
(86) Internationale Anmeldenummer: PCT/EP2020/079395
(87) Internationale Veröffentlichungsnummer: WO 2022/083847

(56) Entgegenhaltungen:
- US-A- 4 385 419
- US-A- 5 194 035

## Beschreibung

Die vorliegende Erfindung betrifft eine Vorrichtung zur Bearbeitung von Geflügelschlachtkörpern oder Teilen davon mit einer zwischen den Beinen befindlichen Schlachtöffnung.

Des Weiteren betrifft die Erfindung ein Verfahren zur Bearbeitung von Geflügelschlachtkörpern oder Teilen davon mit einer zwischen den Beinen befindlichen Schlachtöffnung.

Derartige Vorrichtungen und Verfahren kommen in der geflügelverarbeitenden Industrie zum Einsatz, um bei Geflügel nach der Schlachtung - und einer zumindest teilweisen Entweidung - eine anschließende Bearbeitung an dem Geflügelschlachtkörper oder Teilen davon vorzunehmen, um Haut-, Muskel- und/oder Knochenbereiche mechanisch zu verformen bzw. zu lösen. Dazu werden die entsprechenden Bereiche der Geflügelschlachtkörper bei der industriellen Verarbeitung unter Einsatz von eingreifenden Vorrichtungsbestandteilen bearbeitet.

Im Zuge der industriellen Verarbeitung von Geflügel werden den Geflügelschlachtkörpern bei der Schlachtung über eine Schlachtöffnung, was beispielsweise die Kloake oder ein Teil der Kloake sein kann, die Innereiensätze mit in der Regel Herz, Leber, Lunge, Nieren, Gallenblase, Speiseröhre, Muskelmagen, Drüsenmagen und Gedärme entnommen. Im Rahmen der industriellen Verarbeitung sind der Schlachtung weitere Verarbeitungsprozesse vor- und/oder nachgelagert, die mittels unterschiedlicher Vorrichtungen bzw. Vorrichtungsbestandteilen ausgeführt werden. Ein besonders wichtiger Aspekt bei der Weiterverarbeitung von Geflügel ist die Zerteilung bzw. Portionierung / Filetierung des geschlachteten und entweideten Geflügels, wobei beispielsweise ein Trennen des Fleisches von der Karkasse erfolgt. Beim Abtrennen des Fleisches von der Karkasse sind regelmäßig komplexe Schnitte, Schnittfolgen oder Teilschnitte erforderlich, um Beschädigungen an der Karkasse oder Fleischbereichen zu vermeiden. Die Schwierigkeit bei der maschinellen Bearbeitung besteht weiter darin, dass keine Beschädigungen an den zu trennenden Teilen erfolgen sollen, um einheitliche und vorgegebene Qualitätsanforderungen zu erfüllen. Typischerweise werden dazu die Geflügelschlachtkörper manuell oder mittels Vorrichtungen vorbereitet, um einen besseren Eingriff der entsprechenden Trennvorrichtungen zu ermöglichen. Es ist bekannt, vor der Portionierung / Filetierung Vorschnitte in unterschiedlichen Bereichen des Geflügels durchzuführen, um anschließend einen sauberen Eingriff mit Trennmitteln zu gewährleisten. Die bekannten Vorrichtung führen diese Vorschnitte allerdings häufig unsauber oder unzureichend aus, wodurch die Messerschnitte bei der anschließenden Portionierung / Filetierung nur ungenau in den Geflügelschlachtkörper eingreifen können, was regelmäßig zu Beschädigungen des Brustbeins führt, insbesondere der Brustbeinspitze im Bereich zwischen den Beinen. Weiterhin ist es bei den bekannten Vorrichtungen und Verfahren zur Durchführung derartiger Vorschnitte erforderlich, dass die Geflügelschlachtkörper in einer vorgegebenen Position / Haltung der Bearbeitungsstation zugeführt werden, damit anschließend die Bearbeitungswerkzeuge die Vorschnitte an konkreten Schnittlinien ausführen können. Die Bearbeitungsstationen weisen unter anderem den Nachteil auf, dass die Bearbeitungswerkzeuge nur für einheitliche Größen der Geflügelschlachtkörper eingesetzt werden können, bei großen Varianzen bei den Geflügelschlachtkörpern führt der Einsatz der bekannten Bearbeitungsstationen zu Fehlschnitten oder Beschädigungen an den Geflügelschlachtkörpern oder Teilen davon. Zudem erfüllen die bekannten Bearbeitungsstationen nur den einen Zweck zur Einrichtung eines Vorschnittes.

Ferner sind im Rahmen der Geflügelverarbeitung Prozesse gewünscht, um einerseits das Fleisch haltbarer zu machen (z. B. durch Kühlung) oder um optisch ansprechendere Geflügelschlachtkörper oder Teile davon zu erzeugen. Dafür wird das Geflügel beispielsweise vor und/oder nach der Kühlung bzw. dem Einfrieren vorbereitet, da im Zuge der Kühlung / dem Einfrieren ein Endprodukt mit optisch wenig ansprechendem Erscheinungsbild auftreten kann. Ferner kann die Totenstarre das optische Erscheinungsbild von Geflügelschlachtkörpern mindern. Beim Einfrieren oder Kühlen fällt der Geflügelschlachtkörper beispielsweise in sich zusammen oder der Geflügelschlachtkörper verformt sich durch die Totenstarre. Indem bei den Geflügelschlachtkörpern vor und/oder nach der Kühlung einzelne Bereiche überdehnt werden, was auch unter den Begrifflichkeiten stretchen, weiten, dehnen etc. bekannt ist, kann der Geflügelschlachtkörper bei der anschließenden bestimmungsgemäßen Verwendung ein natürliches Erscheinungsbild aufweisen, d. h. die Proportionen oder die Anordnung der Anatomie des Geflügelschlachtkörpers besitzt bei der anschließenden Verwendung ein natürliches Aussehen. Hierzu sind vor allem die größten Muskelpartien des jeweiligen Geflügelschlachtkörpers zu bearbeiten, insbesondere die Brustmuskeln, was derzeit häufig manuell erfolgt.

Seit der jüngeren Vergangenheit bestehen zunehmend höhere Anforderungen an das optische Erscheinungsbild der Nahrungsmittel. Es steigen insbesondere die Anforderungen hinsichtlich der Qualität und dem natürlichen Erscheinungsbild von geschlachteten Produkten sukzessive an. Gleichzeitig besteht ein großer Preisdruck bei den Produzenten, Herstellern und den Vertriebsgesellschaften von Nahrungsmitteln, weshalb zur Kostenreduzierung konsequenterweise verfahrenstechnische Optimierungen bei den Schlachtprozessen gefordert werden. Es ist ein Bestreben der Produzenten, kostenintensive manuelle Bearbeitungen durch automatisierte Vorrichtungen zu ersetzen. Ferner weisen die bestehenden Vorrichtungen und Verfahren zur Bearbeitung von Geflügelschlachtkörper regelmäßig einen hohen Komplexitätsgrad bei der Führung und dem Einsatz von Schneidmitteln auf, was zu hohen Investitionskosten sowie zu hohen Betriebs- und Wartungskosten führt. Eine bedarfsgerechte Vorbereitung von Geflügelschlachtkörpern kann somit zu Kostenersparnissen bei der Geflügelverarbeitung führen. Die bekannten Vorrichtungen und Verfahren zur Bearbeitung von Geflügelschlachtkörpern vor der anschließenden Zerteilung weisen in der Regel viele Bauteile und Verfahrensschritte sowie steuerungselektronische Komponenten auf, was zu Fehleranfälligkeiten während des Bearbeitungsvorgangs der Geflügelschlachtkörper führt. Die erfolgten Bearbeitungen führen ferner regelmäßig nicht zu den gewünschten Ergebnissen, damit eine anschließende Zerteilung zuverlässig ausgeführt werden kann, zum Beispiel weil ein unzureichender Krafteintrag auf den Geflügelschlachtkörper erfolgt oder wenn bei zu großen Kräften eine Beschädigung an dem Geflügelschlachtkörper oder Teilen davon angerichtet wird.

Ein weiterer Nachteil der bestehenden Vorrichtungen zur Bearbeitung von Geflügelschlachtkörpern besteht zudem darin, dass diese nur ein enges Einsatzspektrum aufweisen. Die Vorrichtungen sind beispielsweise nur zur Erzeugung eines Vorschnitts geeignet oder nur zur Durchführung einer Weitung von einzelnen Extremitäten zur anschließenden Zerteilung. Eine weitere oder unterschiedliche Verwendung der bekannten Vorrichtungen ist nur mit aufwendigen Umrüstungen gegeben, was zu hohen Kosten bei der Verwendung führt.

Aus der US 5 194 035 A1 sind eine automatische Geflügelverarbeitungsanlage und ein entsprechendes Verfahren bekannt, das die direkte Übernahme von Geflügel von einem herkömmlichen Überkopfförderer ohne manuelles Eingreifen ermöglicht. In diesem Zusammenhang werden federbelastete Beinhalterungen offenbart, die eine kurzzeitige Bewegung eines Vogels relativ zu einem Überkopfförderer verhindern, während ein Ladekonus in die Körperhöhle des Vogels eingeführt wird.

Der Erfindung liegt somit die Aufgabe zugrunde, eine Vorrichtung vorzuschlagen, die einerseits eine zuverlässige Bearbeitung von Geflügel bei der Vorbereitung für nachfolgende Weiterverarbeitungen gewährleistet und die andererseits einen geringen Komplexitätsgrad aufweist sowie ein breites Anwendungsspektrum bereithält. Die Aufgabe besteht des Weiteren darin, ein entsprechendes Verfahren vorzuschlagen.

Diese Aufgabe wird durch die eingangs genannte Vorrichtung gelöst, umfassend eine Fördereinrichtung mit einem antreibbaren Transportförderer zur an den Beinen hängenden, kontinuierlichen Förderung der zu bearbeitenden Geflügelschlachtkörper oder Teilen davon entlang eines Transportpfads in Transportrichtung T, mindestens eine an dem Transportförderer angeordnete Haltevorrichtung zum Halten der Geflügelschlachtkörper oder Teilen davon an den Beinen während der Förderung entlang des Transportpfads, eine entlang des Transportpfads im Bereich des Transportförderers angeordnete Bearbeitungsstation, wobei die Bearbeitungsstation einen auf einer Drehachse drehbar gelagerten Eingriffsgrundkörper mit mindestens einem Eingriffselement umfasst, und das mindestens eine Eingriffselement zum zumindest teilweisen Eingriff mit der Schlachtöffnung der Geflügelschlachtkörper ausgebildet und eingerichtet ist, wobei bei dem zumindest teilweisen Eingriff des mindestens einen Eingriffselements mit dem Geflügelschlachtkörper oder Teilen davon unter Beibehaltung der kontinuierlichen Förderung des Geflügelschlachtkörpers entlang des Transportpfads unter Entstehung eines Drehmoments eine Weitung der Schlachtöffnung erfolgt und der Eingriffsgrundkörper zur Aufnahme des Drehmoments ausgebildet und eingerichtet ist, wobei falls das Drehmoment ein vorbestimmtes Drehmoment überschreitet, ein selbsttätiges Freigeben des Eingriffselements aus der Schlachtöffnung durch Rotation des Eingriffsgrundkörpers um die Drehachse erfolgt. Durch die erfindungsgemäße Vorrichtung wird sichergestellt, dass jeder zu bearbeitende Geflügelschlachtkörper durch die Bearbeitungsstation einerseits zuverlässig und im Wesentlichen unabhängig von den Abmessungen bearbeitet wird und andererseits die Bearbeitung anhand voreinstellbarer Parameter durchgeführt wird. Das Eingriffselement greift den Geflügelschlachtkörper in dem dafür vorgesehenen Bereich zwischen den Beinen in der Schlachtöffnung ein und erzeugt durch die kontinuierliche Förderung ein Drehmoment gegen das zunächst feststehende Eingriffselement bzw. gegen den Eingriffsgrundkörper. Es wird auf diese Weise insbesondere eine Weitung der betreffenden Geflügelpartie erzeugt, was insbesondere zu einer Weitung der Haut, der Sehnen bzw. des Muskels in dem Bereich führt. Insbesondere wird bei einem Eingriff des Eingriffselements die Brustmuskulatur bzw. zumindest die Haut oder die Sehnen zwischen den Muskelpartien in diesem Bereich geweitet. Die durchgeführte Weitung ermöglicht einen zuverlässigen Eingriff mit nachfolgenden Schneidwerkzeugen, wodurch insbesondere eine Verletzung des Brustbeins bzw. der Brustbeinspitze vermieden wird. Durch das vorbestimmbare Drehmoment bei dem Eingriffsgrundkörper, der bei Überschreiten selbsttätig eine Rotation ausführt, wird sichergestellt, dass nur ein maximaler vorbestimmter Krafteintrag in Form eines Drehmoments auf den Geflügelschlachtkörper wirkt, wodurch zu hohe Kräfte vermieden werden, was wiederum einer Beschädigung an dem Geflügelschlachtkörper oder Teilen davon vorbeugt. Das vorbestimmte Drehmoment kann von unterschiedlichen Faktoren abhängig sein. Bei dem vorbestimmten Drehmoment ist insbesondere zu berücksichtigen, wie groß/stark die Weitung des Geflügelschlachtkörpers bzw. des jeweiligen Bereichs des Geflügelschlachtkörpers (z. B. die Brustmuskulatur und/oder das Bindegewebe in diesem Bereich) erfolgen soll. Falls eine geringere Weitung des betreffenden Bereichs gewünscht ist, beispielsweise falls nur Hautbereiche geweitet werden sollen, kann das zu überschreitende Drehmoment geringer gewählt werden, wobei bei einer starken Weitung ein höheres zu überschreitendes Drehmoment des Eingriffsgrundkörpers zu wählen ist. Ferner ist das zu überschreitende Drehmoment insbesondere vom Gewicht, der Größe und/oder der Geflügelart abhängig einstellbar, wobei in der Regel bei kleineren und leichteren Geflügelschlachtkörpern zur Verwirklichung des Erfindungsgedankens ein geringeres Drehmoment zu überschreiten ist, im Vergleich zu größeren und schwereren Geflügelschlachtkörpern. Das zu überschreitende Drehmoment ist jedoch grundsätzlich frei wählbar und kann je nach Anwendungsfall individuell ausfallen, wobei es jeweils zumindest ausreichend groß gewählt sein muss, um eine Weitung an dem Geflügelschlachtkörper oder Teilen davon einzurichten. Vorzugsweise kann durch die Weitung auch schon eine Zerstörung/(Ab-)Trennung von (Teil-)Bereichen des Geflügelschlachtkörpers eingerichtet werden, d. h. die Schlachtöffnung oder daran angegliederte Bereiche können aufgerissen werden, wodurch die Struktur des Geflügels veränderbar ist. Eine derartige Bearbeitung kann z. B. einen nachgeordneten Eingriff mit weiteren (Schneid-)Werkzeugen erleichtern. Unter der Begrifflichkeit "weiten" ist synonym dehnen, stretchen, spannen, verschieben etc. zu verstehen. Wobei unter dem Begriff "weiten" sämtliche optische und/oder anatomische Veränderungen an dem bearbeiteten Geflügelschlachtkörper zu verstehen sind, insbesondere eine irreversible Weitung der Haut und/oder der Muskulatur im Brustbereich des Geflügels. Die Weitung wird insbesondere durch Destabilisierung von vorhandenem Bindegewebe erzeugt, wobei Bindegewebe Fettgewebe, Knorpelgewebe, Sehnen, Bänder, (Blut-)Gefäße und Haut umfassen.

Vorzugsweise werden eine Vielzahl an Geflügelschlachtkörpern jeweils auf einer Vielzahl an Haltevorrichtung kontinuierlich entlang des Transportpfads mittels des Transportförderers beispielsweise mittels einer Förderkette gefördert. Dazu können die Geflügelschlachtkörper manuell oder automatisiert auf den Haltevorrichtungen bereitgestellt werden. Die Vorrichtung zur Bearbeitung der Geflügelschlachtkörper kann entweder als eigenständige Vorrichtung eingesetzt werden, oder innerhalb eines komplexeren Verarbeitungsprozesses von Geflügel integriert sein.

Eine zweckmäßige Ausgestaltung der Erfindung ist dadurch gekennzeichnet, dass das mindestens eine Eingriffselement mindestens ein Schneidmittel umfasst, ausgebildet und eingerichtet den Geflügelschlachtkörper oder Teile davon vor, während und/oder nach dem Eingriff des Eingriffselements mit der Schlachtöffnung einzuschneiden, insbesondere im Bereich der Schlachtöffnung. Durch das Schneidmittel ist insbesondere die Möglichkeit zur Erzeugung eines Vorschnitts an den Geflügelschlachtkörpern gegeben. Derartige Vorschnitte dienen z. B. zur vereinfachten nachgeordneten Zerteilung / Filetierung der Geflügelschlachtkörper bzw. dem vereinfachten Trennen des Fleisches von der Karkasse. Der Vorschnitt soll unter anderem zum vereinfachten Gewinnen der Hühnerbeine bzw. der Brustmuskulatur beitragen, indem bei den nachfolgenden Schnittvorgängen die abzutrennenden Bereiche gut zugänglich sind. Das mindestens eine Schneidmittel des Eingriffselements ist vorzugsweise als Messer ausgebildet, das an der passiven Seite des Eingriffselements angeordnet ist, d. h. auf der zum Eingriff mit der Schlachtöffnung abgewandten Seite des Eingriffselements. Das mindestens eine Schneidmittel steht weiter bevorzugt beim Eingriff nicht im direkten Kontakt mit der Schlachtöffnung. Die Schneidmittel schneiden bevorzugterweise beim Eingriff der Eingriffselemente in die Schlachtöffnung nicht direkt den Geflügelschlachtkörper ein, sondern erzeugen den Schnitt beim Verlassen des Eingriffselements aus der Schlachtöffnung beim Freigeben des Eingriffselements durch Rotation des Eingriffsgrundkörpers. Es kann aber auch beispielsweise ein Schnitt beim Eindringen und/oder während des ansetzenden Drehmoments erzeugt werden. Durch die Ausbildung von Schneidmitteln an dem Eingriffselement kann ein zuverlässiger und positionssicherer Vorschnitt an der Schlachtöffnung erzeugt werden. Vorteilhafterweise kann auf diese Weise das erforderliche Drehmoment zur Weitung des Geflügelschlachtkörpers reduziert werden, da eine Weitung bzw. ein Freilegen zur besseren Bearbeitung durch den Vorschnitt ergänzend erfolgt. Der Vorschnitt umfasst weiter bevorzugt zwei Schnitte, die jeweils in beiden Bereichen zwischen Bein und dem Ende der Brustmuskulatur ausgeführt werden. Unter dem Einschneiden "im Bereich der Schlachtöffnung" ist die Erzeugung eines Schnitts in unmittelbarer Nähe zu der Schlachtöffnung zu verstehen, insbesondere am unteren Ende der Brustmuskeln.

Eine bevorzugte Weiterbildung der Erfindung zeichnet sich dadurch aus, dass das vorbestimmte Drehmoment mittels eines mit dem Eingriffsgrundkörper in Wirkverbindung stehenden Federelements einstellbar ausgebildet und eingerichtet ist und/oder dass das vorbestimmte Drehmoment mittels einer mit der Drehachse in Wirkverbindung stehenden Antriebseinheit einstellbar ausgebildet und eingerichtet ist. Auf diese Weise ist eine einfache und komfortable Einstellbarkeit des Drehmoments gegeben, um das erforderliche bzw. einzustellende Drehmoment an die zu bearbeitenden Geflügelschlachtkörper anzupassen. Zur Einstellung des Drehmoments können vorzugsweise weitere elektrische, mechanische und/oder steuerelektronischen Komponenten vorgesehen sein, insbesondere zur voll- oder halbautomatischen Einstellbarkeit des Drehmoments. Als Federelement kommen insbesondere mechanische, hydraulische oder pneumatische Federelemente bzw. Kombinationen davon in Betracht. Die Antriebseinheit ist beispielsweise ein Motor, insbesondere ein Elektromotor, der gegen ein voreingestelltes Drehmoment eingestellt ist und bei Überschreiten dieses Drehmoments automatisch in einen Freilauf überführt wird, wodurch eine Rotation des Eingriffsgrundkörper um die Drehachse erfolgt. Weiter bevorzugt kann die Antriebseinheit mindestens ein Getriebe zur Vergrößerung des Einsatzbereiches umfassen. In einer besonderen Ausführungsform kann die Antriebseinheit auch rein mechanische Komponenten umfassen, wobei das einstellbare Drehmoment mit diesen einstellbar ausgebildet ist.

Gemäß einer weiteren bevorzugten Ausbildung der Erfindung umfasst die Antriebseinheit einen Stellantrieb, ausgebildet und eingerichtet zur Einstellung eines definierten Verlaufs des vorbestimmten Drehmoments und zur Freigabe des Eingriffsgrundkörpers. Auf diese Weise ist eine komfortable Möglichkeit gegeben, je nach Bedarf, d. h. in Abhängigkeit der zu bearbeitenden Geflügelschlachtkörper, das erforderliche Drehmoment einzustellen. Zudem ermöglicht der Stellantrieb eine Überwachung des Drehmoments und eine bedarfsgerechte Anpassung des Drehmoments, beispielsweise während des Bearbeitungsvorgangs. Vorzugsweise ist der Stellantrieb als Servomotor ausgebildet.

Eine zweckmäßige Ausgestaltung der Erfindung ist dadurch gekennzeichnet, dass der Eingriffsgrundkörper eine Kurvenscheibe umfasst, wobei die Kurvenscheibe mit dem Federelement in Wirkverbindung steht und ausgebildet ist, beim Überschreiten des vorbestimmten Drehmoments auf das Eingriffselement eine Rotation des Eingriffsgrundkörpers um die Drehachse freizugeben. Durch die Kombination der Kurvenscheibe mit dem Federelement ist eine Möglichkeit mit geringem Komplexitätsgrad gegeben, um eine zuverlässige Einstellung und Veränderbarkeit des Drehmoments herbeizuführen sowie den Verlauf der Freigabe zu steuern. Dazu kann beispielsweise sowohl die Kurvenscheibe als auch das Federelement entsprechend den Vorgaben des Drehmoments angepasst sein. Bei einem Überschreiten des Drehmoments, was in der Ausgestaltung durch das Federelement sowie die Ausgestaltung der Kurvenscheibe vorgegeben ist, erfolgt eine Freigabe des Eingriffsgrundkörpers. Das Federelement umfasst vorzugsweise einen Abtaster zum Eingriff mit der Kurvenscheibe. Der Abtaster steht weiter bevorzugt in direktem Kontakt mit der Kurvenscheibe und dient der Kraftübertragung zwischen Kurvenscheibe und Federelement. Bei Überschreiten des vorgegebenen Drehmoments wird das Federelement gestaucht und der Abtaster bewegt sich in bzw. auf der Kurvenscheibe. Der Abtaster umfasst z. B. ein auf dem Umfang der Kurvenscheibe führbares Laufrad. Die Geometrie der Kurvenscheibe weist vorzugsweise Aussparungen / Einkerbungen und Erhebungen / Erhöhungen / Steigungen auf, die zur Einstellung der Freigabe des Eingriffsgrundkörpers, d. h. zur Steuerung des Verlaufs der Freigabe sowie zur Beendigung der Rotation, ausgebildet und eingerichtet sind.

Eine bevorzugte Weiterbildung der Erfindung zeichnet sich dadurch aus, dass die Kurvenscheibe mindestens eine Umfangssteuerkurve aufweist, die mittels des Federelements die Rotation des Eingriffsgrundkörpers bei Eingriff des Eingriffselements mit der Schlachtöffnung steuert, wobei die mindestens eine Umfangssteuerkurve ausgebildet ist, die selbsttätige Rotation des Eingriffsgrundkörpers um die Drehachse nach dem Freigeben des Eingriffselements aus der Schlachtöffnung des Geflügelschlachtkörpers zu beenden. Durch die Umfangssteuerkurve kann die Rotation des Eingriffsgrundkörpers bei der Freigabe unterbunden werden, indem mindestens ein Bereich vorhanden ist, der eine erneute Ruhestellung des Eingriffsgrundkörpers bewirkt und wodurch erst bei einem erneuten Überschreiten des Drehmoments eine erneute Freigabe des Eingriffsgrundkörpers erfolgt. Der mindestens eine Bereich der Kurvenscheibe bzw. der Umfangssteuerkurve wird beispielsweise durch mindestens eine Aussparung / Einkerbung und durch mindestens eine daran angrenzende Erhebung / Erhöhung / Steigung, d. h. durch mindestens ein bereichsweise verringerter Radius der Kurvenscheibe sowie ein bereichsweise vergrößerter Radius der Kurvenscheibe, gebildet.

Eine bevorzugte Ausführungsform ist dadurch gekennzeichnet, dass das Eingriffselement einen hakenförmigen Eingriffsabschnitt umfasst, wobei der hakenförmige Eingriffsabschnitt zum zumindest teilweisen Eingriff mit der Schlachtöffnung ausgebildet und eingerichtet ist. Durch den hakenförmigen Eingriffsabschnitt ist ein zuverlässiger und führbarer Eingriff des Eingriffselements mit der Schlachtöffnung gegeben, wobei gleichzeitig die hakenförmige Kontur einem zu langen Eingriff mit der Schlachtöffnung vorbeugt, indem ein selbsttätiges Freigeben des hakenförmigen Eingriffsabschnitts bei der Rotation um die Drehachse möglich ist. Der hakenförmige Eingriffsabschnitt kann in seiner Länge und seiner Breite individuell an die zu weitenden Geflügelbereiche angepasst sein. Vorzugsweise ist das Eingriffselement, jedoch zumindest der Eingriffsabschnitt, austauschbar ausgebildet. Bei dem hakenförmigen Eingriffsabschnitt können Aufnahmemöglichkeiten für weitere Mittel vorhanden sein, um beispielsweise Schneidmittel oder Eingriffsabschnitte mit größeren Dimensionen daran zu befestigen und/oder auszutauschen.

Eine bevorzugte Weiterbildung der Erfindung zeichnet sich dadurch aus, dass die Bearbeitungsstation einen Führungsabschnitt zum Führen und/oder Ausrichten der Geflügelschlachtkörper umfasst, wobei der Führungsabschnitt dem mindestens einen Eingriffselement vorgelagert angeordnet ist. Der Führungsabschnitt ermöglicht eine zielgerichtete Zuführung des Geflügelschlachtkörpers, um einen zuverlässigen Eingriff mit dem Eingriffselement zu gewährleisten. Zudem kann der Führungsabschnitt als Gegenlageelement beim Eingriff fungieren, um beispielsweise ein Verrutschen des Geflügelschlachtkörpers zu verhindern. Weiter bevorzugt umfasst der Führungsabschnitt mindestens ein weiteres Führungselement, das zur Aufnahme oder Führung mindestens einer der Extremitäten der Geflügelschlachtkörper ausgebildet ist. Besonders bevorzugt ist der Führungsabschnitt mit einer Steigung / Neigung in Verlauf der Transportrichtung T ausgebildet, um ein Aufliegen des Geflügelschlachtkörpers zu ermöglichen und wodurch die Schlachtöffnung für das Eingriffselement zugänglich gemacht wird. Der Führungsabschnitt ist besonders bevorzugt als eine Ausnehmung aufweisende Rutsche ausgebildet; das Führungselement umfasst vorzugsweise Schienenelemente zur Führung der Flügel und/oder der Beine.

In einer weiteren vorteilhaften Ausgestaltung der Erfindung ist der Bearbeitungsstation eine Wägeeinrichtung zur Ermittlung der Gewichtskraft der Geflügelschlachtkörper vorgelagert angeordnet, und die Wägeeinrichtung ausgebildet und eingerichtet, das vorbestimmte Drehmoment in Abhängigkeit der ermittelten Gewichtskraft automatisch einzustellen. Auf diese Weise ist ein vollautomatischer Betrieb der Vorrichtung gegeben, ohne eine manuelle oder maschinelle Anpassung des Drehmoments vorzunehmen. Ergänzend umfasst dazu die Wägeeinrichtung vorzugsweise eine Rechner- und/oder Steuereinheit, zur Berechnung und Einstellung des Drehmoments in Abhängigkeit der Gewichtskraft der Geflügelschlachtkörper. Weiter bevorzugt können die ermittelten Werte der Wägeeinrichtung für weitere Verarbeitungsprozesse zur Verfügung stehen, beispielsweise für Sortier- oder Klassifizierungsschritte.

Eine weitere zweckmäßige Ausbildung der Erfindung ist dadurch gekennzeichnet, dass der Eingriffsgrundkörper im Wesentlichen rotationssymmetrisch ausgebildet und eingerichtet ist, wobei eine Mehrzahl an Eingriffselementen an dem Umfang des Eingriffsgrundkörpers angeordnet sind, insbesondere drei bis neun Eingriffselemente. Besonders bevorzugt umfasst der Eingriffsgrundkörper fünf Eingriffselement. Auf diese Weise ist eine Gestaltung mit hoher Effizienz bei gleichzeitiger kompakter Bauweise und die Möglichkeit einer kontinuierlichen Verwendung der Vorrichtung für die Verarbeitung von Geflügelschlachtkörper gegeben.

In einer weiteren vorteilhaften Ausführungsform der Erfindung ist die Schlachtöffnung der Geflügelschlachtkörper im Bereich der Kloake ausgebildet. Je nach Geflügelart kann die Schlachtöffnung, d. h. die Eingriffsöffnung für das Eingriffselement, in einer bevorzugten Ausführungsform in unterschiedlichen Bereichen des Geflügelschlachtkörpers vorliegen, beispielsweise wenn unterschiedliche Bereiche des Geflügels mittels der Bearbeitungsstation geweitet werden sollen.

Des Weiteren wird die Aufgabe durch das eingangs genannte Verfahren mit den folgenden Schritten gelöst: kontinuierliche Förderung der zu bearbeitenden Geflügelschlachtkörper oder Teilen davon mittels einer Fördereinrichtung entlang eines Transportpfads in Transportrichtung T, Halten der Geflügelschlachtkörper oder Teilen davon an den Beinen während der Förderung entlang des Transportpfads mittels mindestens einer an dem Transportförderer angeordneten Haltevorrichtung, Führen der Geflügelschlachtkörper in eine entlang des Transportpfads im Bereich des Transportförderers angeordnete Bearbeitungsstation, zumindest teilweiser Eingriff eines auf einer Drehachse drehbar gelagerten und auf einem Eingriffsgrundkörper angeordneten Eingriffselements der Bearbeitungsstation mit der Schlachtöffnung des Geflügelschlachtkörpers, Weitung der Schlachtöffnung unter Entstehung eines Drehmoments bei dem zumindest teilweisen Eingriff des mindestens einen Eingriffselements mit dem Geflügelschlachtkörper oder Teilen davon unter Beibehaltung der kontinuierlichen Förderung, und selbsttätiges Freigeben des Eingriffselements aus der Schlachtöffnung durch Rotation des Eingriffsgrundkörpers um die Drehachse bei einem Überschreiten eines vorbestimmten Drehmoments auf das mindestens eine Eingriffselement. Auf diese Weise ist ein zuverlässiges Weiten im Bereich der Schlachtöffnung gegeben, insbesondere werden die Brustmuskulatur oder Teile davon, die angrenzenden Haut- und/oder Bindegewebebereiche und/oder das Brustbein mit den angrenzenden Knochenteilen geweitet. Vorzugsweise wird die Schlachtöffnung bei diesem Vorgang vergrößert und die Stellung der Beine verändert.

Zur Vermeidung von Wiederholungen wird im Zusammenhang mit dem erfindungsgemäßen Verfahren auf die bereits im Zusammenhang mit der erfindungsgemäßen Vorrichtung im Detail geschilderten Vorzüge verwiesen. Diese gelten in analoger Weise auch für das angegebene erfindungsgemäße Verfahren.

Eine zweckmäßige Ausgestaltung der Erfindung ist gekennzeichnet durch Verstellen der Kreismesser synchron und/oder im Wesentlichen orthogonal zum Transportpfad mittels der Steuereinrichtung.

Eine bevorzugte Weiterbildung der Erfindung zeichnet sich durch Einschneiden des Geflügelschlachtkörpers oder Teile davon, insbesondere im Bereich der Schlachtöffnung, vor, während und/oder nach dem Eingriff des Eingriffselement mit der Schlachtöffnung mittels eines an dem Eingriffselement angeordneten Schneidmittels.

Eine vorteilhafte Weiterbildung der Erfindung ist gekennzeichnet durch Einstellen des vorbestimmten Drehmoments mittels eines mit dem Eingriffsgrundkörper in Wirkverbindung stehenden Federelements und/oder mittels einer mit der Drehachse in Wirkverbindung stehenden Antriebseinheit.

Eine bevorzugte Weiterbildung der Erfindung zeichnet sich aus durch Einstellen eines definierten Verlaufs des vorbestimmten Drehmoments und Freigeben des Eingriffsgrundkörpers mittels eines die Antriebseinheit umfassenden Stellantriebs.

Eine weitere vorteilhafte Weiterbildung der Erfindung ist gekennzeichnet durch Einrichten einer Rotation des Eingriffselements um die Drehachse mittels einer Kurvenscheibe des Eingriffsgrundkörpers bei Überschreiten des vorbestimmten Drehmoments auf das Eingriffselement, wobei die Kurvenscheibe mit dem Federelement in Wirkverbindung steht.

Eine zweckmäßige Ausgestaltung der Erfindung ist gekennzeichnet durch Steuern der Rotation des Eingriffsgrundkörpers durch mindestens eine Umfangssteuerkurve der Kurvenscheibe mittels des Federelements bei Eingriff des Eingriffselements mit der Schlachtöffnung, wobei durch die Umfangssteuerkurve die selbsttätige Rotation des Eingriffsgrundkörpers um die Drehachse nach dem Freigeben des Eingriffselements aus der Schlachtöffnung des Geflügelschlachtkörpers beendet wird.

Eine bevorzugte Weiterbildung der Erfindung zeichnet sich aus durch teilweisen Eingriff eines hakenförmigen Eingriffsabschnitts des Eingriffselements mit der Schlachtöffnung.

Eine weitere vorteilhafte Weiterbildung der Erfindung ist gekennzeichnet durch Führen und/oder Ausrichten der Geflügelschlachtkörper durch einen Führungsabschnitt der Bearbeitungsstation, wobei der Führungsabschnitt dem mindestens einen Eingriffselement vorgelagert angeordnet ist.

Eine zweckmäßige Ausgestaltung der Erfindung ist gekennzeichnet durch Ermittlung der Gewichtskraft der Geflügelschlachtkörper mittels einer der Bearbeitungsstation vorgelagert angeordneten Wägeeinrichtung, um mittels der Wägeeinrichtung das vorbestimmte Drehmoment in Abhängigkeit der ermittelten Gewichtskraft automatisch einzustellen.

Besonders bevorzugt wird das Verfahren mit einer Vorrichtung nach einem oder mehreren der Ansprüche 1 bis 11 ausgeführt.

Die sich daraus ergebenden Vorteile und Effekte wurden bereits im Zusammenhang mit der Vorrichtung beschrieben, weshalb zur Vermeidung von Wiederholungen auf die vorstehenden Passagen verwiesen wird.

Weitere zweckmäßige und/oder vorteilhafte Merkmale, Ausgestaltungen und Weiterbildungen der Erfindung ergeben sich aus den Unteransprüchen und der Beschreibung.

Besonders bevorzugte Ausführungsformen der Vorrichtung sowie des Verfahrens werden anhand der beigefügten Zeichnungen näher erläutert. Die Zeichnungen zeigen:
- Fig. 1: eine schematische Darstellung einer erfindungsgemäßen Vorrichtung in einer perspektivischen Darstellung von schräg oben mit an den Beinen hängenden Geflügelschlachtkörpern,
- Fig. 2: eine detaillierte Seitenansicht einer erfindungsgemäßen Bearbeitungsstation mit einem Ausschnitt eins Transportförderers,
- Fig. 3: die erfindungsgemäße Vorrichtung der Fig. 1 in einer perspektivischen Ansicht von Vorne in Verlauf der Transportrichtung während der Bearbeitung eines Geflügelschlachtkörpers und
- Fig. 4: die Bearbeitungsstation der Fig. 2 in einer Ansicht von Vorne in Verlauf der Transportrichtung während der Bearbeitung eines Geflügelschlachtkörpers.

Anhand der vorgenannten Figuren werden die erfindungsgemäße Vorrichtung sowie das erfindungsgemäße Verfahren näher beschrieben. Zur Vermeidung von Wiederholungen gelten die gemachten Ausführungen zur Vorrichtung auch für das erfindungsgemäße Verfahren, so dass im Folgenden nur zu ausgewählten Aspekten des erfindungsgemäßen Verfahrens, losgelöst von der erfindungsgemäßen Vorrichtung, Ausführungen gemacht werden.

Die in den Zeichnungen dargestellte Vorrichtung ist zum Bearbeiten von Geflügelschlachtkörpern ausgebildet und eingerichtet. Die Vorrichtung ist insbesondere zum Bearbeiten von Hühnern ausgebildet und eingerichtet. Die Erfindung bezieht sich in gleicher Weise auf vergleichbare Geflügelarten oder Tierarten, bei denen eine Schlachtöffnung mit der erfindungsgemäßen Vorrichtung und/oder mit dem erfindungsgemäßen Verfahren geweitet werden sollen. Ferner ist die Vorrichtung und das Verfahren zum Weiten und Dehnen von Haut- und Bindegewebebereichen von Geflügelschlachtkörpern sowie des Brustbeins und der daran angrenzenden Knochenteile ausgebildet und eingerichtet. Die Erfindung bezieht sich ebenfalls gleichermaßen auf das Weiten von Öffnungen, die nicht (nur) durch Schlachtung entstanden sind, sondern beispielsweise bereits aufgrund der Anatomie des entsprechenden Geflügels / des Tieres vorliegen.

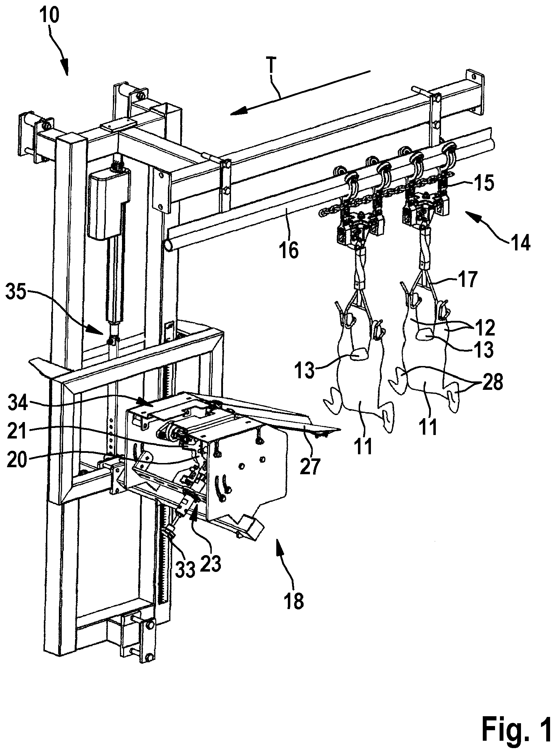

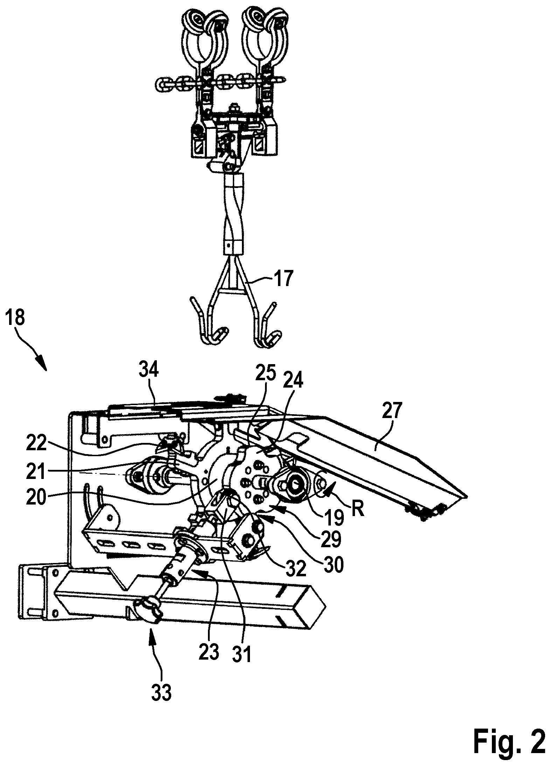

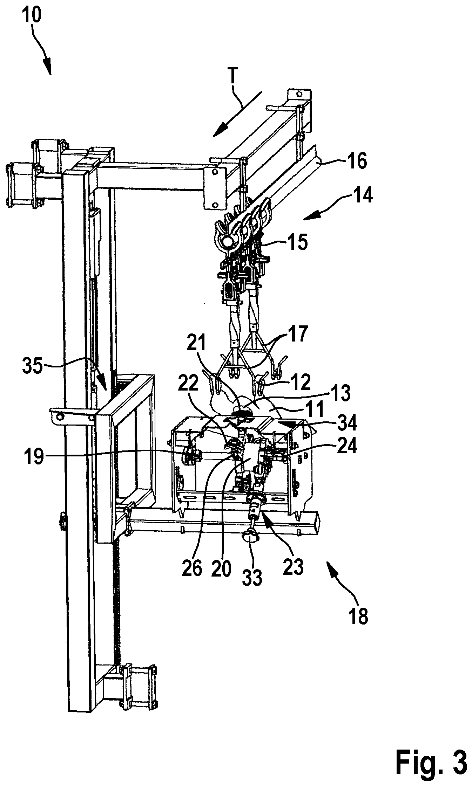

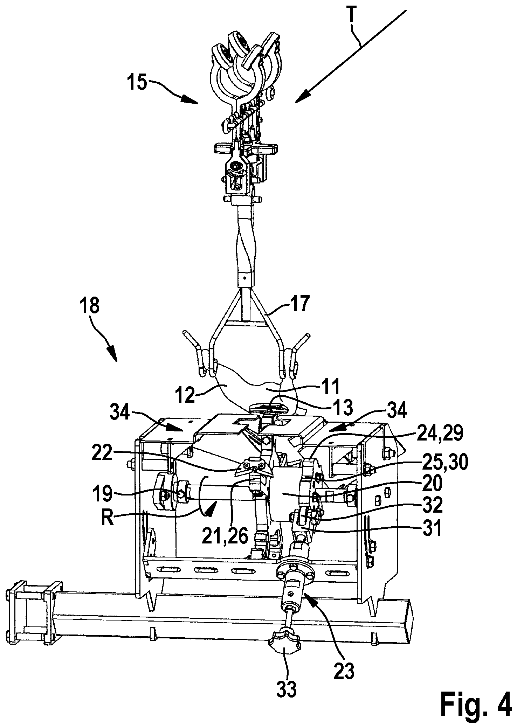

Die dargestellt Vorrichtung 10 ist zur Bearbeitung von Geflügelschlachtkörpern 11 oder Teilen davon mit einer zwischen den Beinen 12 befindlichen Schlachtöffnung 13 ausgebildet und eingerichtet, umfassend eine Fördereinrichtung 14 mit einem antreibbaren Transportförderer 15 zur an den Beinen 12 hängenden kontinuierlichen Förderung der zu bearbeitenden Geflügelschlachtkörper 11 oder Teilen davon (siehe Fig. 1 und Fig. 3) entlang eines Transportpfads 16 in Transportrichtung T. An dem mindestens einen Transportförderer 15 ist eine Haltevorrichtung 17 zum Halten der Geflügelschlachtkörper 11 oder Teilen davon an den Beinen 12 während der Förderung entlang des Transportpfads 16 angeordnet. Entlang der Fördereinrichtung 14 ist im Bereich des Transportförderers 15 eine Bearbeitungsstation 18 (siehe im Detail Fig. 2 und Fig. 4) angeordnet, wobei die Bearbeitungsstation 18 einen auf einer Drehachse 19 drehbar gelagerten Eingriffsgrundkörper 20 mit mindestens einem Eingriffselement 21 umfasst. Das mindestens eine Eingriffselement 21 ist zum zumindest teilweisen Eingriff mit der Schlachtöffnung 13 der Geflügelschlachtkörper 11 ausgebildet und eingerichtet, wobei bei dem zumindest teilweisen Eingriff des mindestens einen Eingriffselements 21 mit dem Geflügelschlachtkörper 11 oder Teilen davon unter Beibehaltung der kontinuierlichen Förderung des Geflügelschlachtkörpers 11 entlang des Transportpfads 16 unter Entstehung eines Drehmoments eine Weitung der Schlachtöffnung 13 und/oder einer Streckung des - in den Figuren nicht im Detail gezeigten - Brustbeins erfolgt und der Eingriffsgrundkörper 20 zur Aufnahme des Drehmoments ausgebildet und eingerichtet ist, wobei falls das Drehmoment ein vorbestimmtes Drehmoment überschreitet, ein selbsttätiges Freigeben des Eingriffselements 21 aus der Schlachtöffnung 13 durch Rotation R des Eingriffsgrundkörpers 20 um die Drehachse 19 erfolgt.

Die erfindungsgemäße Vorrichtung 10 ist dabei in der Regel in eine - in den Figuren nicht gezeigte - Bearbeitungsstraße mit verschiedenen weiteren Vorrichtungen integriert, in der Geflügel mit einem möglichst hohen Automatisierungsgrad geschlachtet und weiterverarbeitet werden.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung und/oder der Zeichnung zusammengefasst oder in einer gemeinsamen Ausführungsform beschrieben sind, auch funktional eigenständig die weiter oben beschriebene Vorrichtung 10 weiterbilden können.

Zum besseren Verständnis der Erfindung wird zunächst die Anatomie der mittels der Erfindung zu bearbeitenden Geflügelschlachtkörper 11 oder Teilen davon beschrieben. In den Fig. 1, Fig. 3 und Fig. 4 sind Geflügelschlachtkörper 11 schematisch und vereinfacht dargestellt. Die Geflügelschlachtkörper 11 weisen in der Regel beim Transportieren auf der Fördereinrichtung 14 noch sämtliche Extremitäten, d. h. beide Beine 12 und beide Flügel 28, auf. Die Geflügelschlachtkörper 11 können nach der Bearbeitung durch die Bearbeitungsstation 18 anschließend weiterverarbeitet werden, d. h. zerteilt oder portioniert werden. Bevorzugterweise kann der zumindest teilweise geweitete Geflügelschlachtkörper 11 auch schon das fertige Endprodukt bilden. Bei den mittels der Vorrichtung 10 zu bearbeitenden Geflügelschlachtkörper 11 befindet sich die Schlachtöffnung 13 zwischen den Beinen 12, insbesondere im Bereich der Kloake bzw. die Schlachtöffnung 13 kann zumindest teilweise durch die Kloake gebildet sein. Die Schlachtöffnung 13 entsteht bei der industriellen Geflügelverarbeitung, indem darüber die - in den Figuren nicht gezeigten - Eingeweide entnommen werden. Es können alternativ oder ergänzend weitere Bereich bzw. Öffnungen bei Geflügelschlachtkörpern mittels der erfindungsgemäßen Vorrichtung geweitet / gestreckt werden, wie zum Beispiel das Brustbein.

In den Fig. 1, Fig. 3 und Fig. 4 sind Geflügelschlachtkörper 11 stilisiert dargestellt, die mit den Beinen 12 hängend an Haltevorrichtungen 17 angeordnet sind und mittels der Fördereinrichtung 14 gefördert werden. Die Geflügelschlachtkörper 11 werden in Verlauf der Transportrichtung T mit dem Transportförderer 15 der Bearbeitungsstation 18 zugeführt bzw. in Eingriff mit der Bearbeitungsstation 18 gebracht, die in der Fig. 4 im Detail während des Eingriffs eines Eingriffselement 21 mit einem Geflügelschlachtkörper 11 gezeigt ist. Die Bearbeitungsstation 18 kann in unterschiedlichen Höhen bei der Vorrichtung 10 positionierbar sein, um beispielsweise unterschiedliche Arten von Geflügel gleichermaßen zu bearbeiten. Dazu weist die Vorrichtung 10 eine Höhen- und/oder Seitenverstelleinrichtung 35, beispielsweise eine Zahnstange oder dergleichen, auf, um daran die Bearbeitungsstation 18 höhenverstellbar und/oder seitenverstellbar auszurichten. Eine derartige Höhen- und/oder Seiteneinstellung der Bearbeitungsstation 18 kann zudem elektronisch und/oder automatisch steuerbar sein, um einen direkten Einfluss auf die zu bearbeitenden Geflügelschlachtkörper 11 zu nehmen.

Bevorzugterweise umfasst das mindestens eine Eingriffselement 21 mindestens ein Schneidmittel 22, ausgebildet und eingerichtet den Geflügelschlachtkörper 11 oder Teile davon vor, während und/oder nach dem Eingriff des Eingriffselement 21 mit der Schlachtöffnung 13 einzuschneiden, insbesondere im Bereich der Schlachtöffnung 13. Die Fig. 3 und Fig. 4 zeigen den Eingriff des Eingriffselement 21 mit der Schlachtöffnung 13, wobei ein Einschneiden der Schlachtöffnung 13 mit dem Schneidmittel 22 eingerichtet ist. Beim Einschneiden der Schneidmittel 22 wirkt ebenfalls ein Drehmoment auf den Geflügelschlachtkörper 11 bzw. das Drehmoment wird durch den Geflügelschlachtkörper 11 auf den Eingriffsgrundkörper 20 über das Eingriffselement 21 übertragen. Bei Überschreiten eines vorbestimmten Drehmoments erfolgt auch bei Eingriffselementen 21 mit Schneidmitteln 22 eine Weitung der Schlachtöffnung 13 sowie eine Freigabe des Eingriffsgrundkörpers 20 durch Rotation R um die Drehachse 19. Je nach Anordnung der Schneidmittel 22 kann das Einschneiden vor und/oder während des Eingriffs des Eingriffselements 21 mit der Schlachtöffnung 13 erfolgen und/oder erst beim Verlassen des Eingriffselements 21 aus der Schlachtöffnung 13 entstehen, indem die Schneidmittel 22 dabei in Eingriff mit den entsprechenden Bereichen kommen.

Vorzugsweise ist das vorbestimmte Drehmoment mittels eines mit dem Eingriffsgrundkörper 20 in Wirkverbindung stehenden Federelements 23 (siehe Fig. 1 bis Fig. 4) einstellbar ausgebildet und eingerichtet und/oder das vorbestimmte Drehmoment ist mittels einer mit der Drehachse 19 in Wirkverbindung stehenden - in den Figuren nicht gezeigten - Antriebseinheit einstellbar ausgebildet und eingerichtet. Die Antriebseinheit treibt bevorzugt die Drehachse direkt oder über Antriebsmittel an. Die Antriebseinheit kann dazu weiter bevorzugt einen Stellantrieb umfassen, ausgebildet und eingerichtet zur Einstellung eines definierten Verlaufs des vorbestimmten Drehmoments und zur Freigabe des Eingriffsgrundkörpers 20.

Der Eingriffsgrundkörper 20 umfasst vorzugsweise eine Kurvenscheibe 24, die insbesondere in der Fig. 2 sowie in der Fig. 4 im Detail dargestellt ist. Die Kurvenscheibe 24 steht mit dem Federelement 23 in Wirkverbindung und ist ausgebildet, beim Überschreiten des vorbestimmten Drehmoments auf das Eingriffselement 21 eine Rotation R des Eingriffsgrundkörpers 20 um die Drehachse 19 freizugeben. Das Überschreiten des Drehmoments entsteht durch die kontinuierliche Förderung der Geflügelschlachtkörper 11 auf dem Transportpfad 16. Bei dem Eingriff der Schlachtöffnung 13 mit dem mindestens einen Eingriffselement 21 entsteht aufgrund der Aufnahmefähigkeit eines vorbestimmten Drehmoments des Eingriffsgrundkörpers 20 jeweils ein Eingriffs-Drehmoment, wobei vorzugsweise das Federelement 23 das vorbestimmte Drehmoment in Verbindung mit der Kurvenscheibe 24 vorgibt. Bei Überschreiten des vorbestimmten Drehmoments durch das Eingriffs-Drehmoment erfolgt die Freigabe aufgrund des maximal vorbestimmten Drehmoments des Federelements 23 durch die Rotation des Eingriffsgrundkörpers 20 um die Drehachse 19. Bei Überschreiten des vorbestimmten Drehmoments durch das Eingriffs-Drehmoment erfolgt mittels der Kurvenscheibe eine Auslösung des Federelements 23, d. h. beispielsweise eine Stauchung, was die Rotation R um die Drehachse 19 freigibt. Das vorbestimmte Drehmoment ist weiter bevorzugt mittels eines die Federkraft des Federelements 23 steuerbaren Verstellelements 33 veränderbar.

Die Kurvenscheibe 24 weist mindestens eine Umfangssteuerkurve 25 auf, die mittels des Federelements 23 die Rotation R des Eingriffsgrundkörpers 20 bei Eingriff des Eingriffselements 21 mit der Schlachtöffnung 13 steuert, wobei die mindestens eine Umfangssteuerkurve 25 ausgebildet ist, die selbsttätige Rotation R des Eingriffsgrundkörpers 20 um die Drehachse 19 nach dem Freigeben des Eingriffselements 21 aus der Schlachtöffnung 13 des Geflügelschlachtkörpers 11 zu beenden. Dazu weist die Kurvenscheibe beispielsweise mindestens eine Erhebung 29 bzw. mindestens eine Aussparung 30 auf, wodurch eine vorgegebene Rotation R eingerichtet ist. Das Federelement 23 weist vorzugsweise einen Abtaster 31 mit einem Laufrad 32 auf, die mit der Kurvenscheibe 24 bzw. mit der Umfangssteuerkurve 25 einwirken, d. h. auf dieser geführt werden. Bei einer Anordnung des Abtasters 31 mit dem Laufrad 32 von der Erhebung 29 in die Aussparung 30 wird die Rotation R um die Drehachse 19 beendet.

Das Eingriffselement 21 umfasst vorzugsweise einen hakenförmigen Eingriffsabschnitt 26, wobei der hakenförmige Eingriffsabschnitt 26 zum zumindest teilweisen Eingriff mit der Schlachtöffnung 13 ausgebildet und eingerichtet ist. Der hakenförmige Eingriffsabschnitt 26 eignet sich durch die Hakenform insbesondere zum lösbaren Eingriff mit der Schlachtöffnung 13.

Die Fig. 1 und Fig. 2 zeigen, dass die Bearbeitungsstation 18 einen Führungsabschnitt 27 zum Führen und/oder Ausrichten der Geflügelschlachtkörper 11 umfasst, wobei der Führungsabschnitt 27 dem mindestens einen Eingriffselement 21 vorgelagert angeordnet ist. Wie in den Fig. 3 und Fig. 4 gezeigt ist, können mittels des Führungsabschnitts 27 die Geflügelschlachtkörper 11 für den anschließenden Eingriff mit den Eingriffselementen 21 in eine Schrägstellung gebracht werden, wodurch ein zielgerichteter Eingriff des Eingriffselements 21 mit dem Geflügelschlachtkörper 11 gegeben ist. Die Geflügelschlachtkörper 11 sind durch den Führungsabschnitt 27 unabhängiger von der Höhe auf dem Transportförderer 15 und geben die Schlachtöffnung 13 für einen exakten Eingriff frei.

Vorzugsweise ist der Bearbeitungsstation 18 eine - in den Figuren nicht gezeigte - Wägeeinrichtung zur Ermittlung der Gewichtskraft der Geflügelschlachtkörper 11 vorgelagert angeordnet, und die Wägeeinrichtung ist dabei weiter bevorzugt ausgebildet und eingerichtet, das vorbestimmte Drehmoment in Abhängigkeit der ermittelten Gewichtskraft automatisch einzustellen. Dazu sind regelmäßig weitere mechanische, elektronische und/oder elektrische Komponenten sowie mindestens eine Rechnereinheit vorgesehen, um eine automatische Einstellung des Drehmoments bzw. des Federelements 23 oder der Antriebseinheit einzustellen.

Vorteilhafterweise ist der Eingriffsgrundkörper 20 im Wesentlichen rotationssymmetrisch ausgebildet und eingerichtet, wobei eine Mehrzahl an Eingriffselementen 21 an dem Umfang des Eingriffsgrundkörpers 20 angeordnet sind, insbesondere drei bis neun Eingriffselemente 21. In den Ausführungsformen der Fig. 1 bis Fig. 4 sind jeweils fünf Eingriffselemente 21 an dem Eingriffsgrundkörper 20 angeordnet. Die Kurvenscheibe 24 ist jeweils zu dem Eingriffsgrundkörper 20 analog ausgebildet, um ein entsprechendes Freigeben des Eingriffsgrundkörpers 20 durch Rotation R um die Drehachse 19 einzurichten. Die erfindungsgemäße Bearbeitungsstation 18 ermöglicht einen kontinuierlichen Betrieb durch die rotationssymmetrische Ausbildung des Eingriffsgrundkörpers 20. Nach der ausgeführten Rotation R um die Drehachse 19 befindet sich jeweils ein Eingriffselement 21 bereit um mit einer Schlachtöffnung 13 eines Geflügelschlachtkörpers 11 einzugreifen. Wie in den Fig.1 bis Fig. 4 gezeigt, können im Bereich des Eingriffs des Eingriffselements 21 mit der Schlachtöffnung 13 des Geflügelschlachtkörpers beispielsweise Schutzelemente 34 (z. B. Bleche) vorgesehen sein, wodurch z. B. ein unerwünschter Kontakt mit den weiteren Bereichen des Eingriffsgrundkörper 20 verhindert wird. Die Schutzelemente 34 geben dabei eine Öffnung frei, in der die Eingriffselemente 21 rotierbar sind.

## Patentansprüche

1. Vorrichtung (10), ausgebildet und eingerichtet zur Bearbeitung von Geflügelschlachtkörpern (11) oder Teilen davon mit einer zwischen den Beinen (12) befindlichen Schlachtöffnung (13), umfassend
eine Fördereinrichtung (14) mit einem antreibbaren Transportförderer (15) zur an den Beinen (12) hängenden kontinuierlichen Förderung der zu bearbeitenden Geflügelschlachtkörper (11) oder Teilen davon entlang eines Transportpfads (16) in Transportrichtung T, mindestens eine an dem Transportförderer (15) angeordnete Haltevorrichtung (17) zum Halten der Geflügelschlachtkörper (11) oder Teilen davon an den Beinen (12) während der Förderung entlang des Transportpfads (16),
eine entlang des Transportpfads (16) im Bereich des Transportförderers (15) angeordnete Bearbeitungsstation (18), wobei die Bearbeitungsstation (18) einen auf einer Drehachse (19) drehbar gelagerten Eingriffsgrundkörper (20) mit mindestens einem Eingriffselement (21) umfasst, und das mindestens eine Eingriffselement (21) zum zumindest teilweisen Eingriff mit der Schlachtöffnung (13) der Geflügelschlachtkörper (11) ausgebildet und eingerichtet ist,
wobei bei dem zumindest teilweisen Eingriff des mindestens einen Eingriffselements (21) mit dem Geflügelschlachtkörper (11) oder Teilen davon unter Beibehaltung der kontinuierlichen Förderung des Geflügelschlachtkörpers (11) entlang des Transportpfads (16) unter Entstehung eines Drehmoments eine Weitung der Schlachtöffnung (13) erfolgt und der Eingriffsgrundkörper (20) zur Aufnahme des Drehmoments ausgebildet und eingerichtet ist,
wobei falls das Drehmoment ein vorbestimmtes Drehmoment überschreitet, ein selbsttätiges Freigeben des Eingriffselements (21) aus der Schlachtöffnung (13) durch Rotation (R) des Eingriffsgrundkörpers (20) um die Drehachse (19) erfolgt.

2. Vorrichtung (10) nach Anspruch 1, **dadurch gekennzeichnet, dass** das mindestens eine Eingriffselement (21) mindestens ein Schneidmittel (22) umfasst, ausgebildet und eingerichtet den Geflügelschlachtkörper (11) oder Teile davon vor, während und/oder nach dem Eingriff des Eingriffselement (21) mit der Schlachtöffnung (13) einzuschneiden, insbesondere im Bereich der Schlachtöffnung (13).

3. Vorrichtung (10) nach Anspruch 1 oder 2, **dadurch gekennzeichnet, dass** das vorbestimmte Drehmoment mittels eines mit dem Eingriffsgrundkörper (20) in Wirkverbindung stehenden Federelements (23) einstellbar ausgebildet und eingerichtet ist und/oder dass das vorbestimmte Drehmoment mittels einer mit der Drehachse (19) in Wirkverbindung stehenden Antriebseinheit einstellbar ausgebildet und eingerichtet ist.

4. Vorrichtung (10) nach Anspruch 3, **dadurch gekennzeichnet, dass** die Antriebseinheit einen Stellantrieb umfasst, ausgebildet und eingerichtet zur Einstellung eines definierten Verlaufs des vorbestimmten Drehmoments und zur Freigabe des Eingriffsgrundkörpers (20).

5. Vorrichtung (10) nach Anspruch 3, **dadurch gekennzeichnet, dass** der Eingriffsgrundkörper (20) eine Kurvenscheibe (24) umfasst, wobei die Kurvenscheibe (24) mit dem Federelement (23) in Wirkverbindung steht und ausgebildet ist, beim Überschreiten des vorbestimmten Drehmoments auf das Eingriffselement (21) eine Rotation (R) des Eingriffsgrundkörpers (20) um die Drehachse (19) freizugeben.

6. Vorrichtung (10) nach Anspruch 5, **dadurch gekennzeichnet, dass** die Kurvenscheibe (24) mindestens eine Umfangssteuerkurve (25) aufweist, die mittels des Federelements (23) die Rotation (R) des Eingriffsgrundkörpers (20) bei Eingriff des Eingriffselements (21) mit der Schlachtöffnung (13) steuert, wobei die mindestens eine Umfangssteuerkurve (25) ausgebildet ist, die selbsttätige Rotation (R) des Eingriffsgrundkörpers (20) um die Drehachse (19) nach dem Freigeben des Eingriffselements (21) aus der Schlachtöffnung (13) des Geflügelschlachtkörpers (11) zu beenden.

7. Vorrichtung (10) nach einem oder mehreren der Ansprüche 1 bis 6, **dadurch gekennzeichnet, dass** das Eingriffselement (21) einen hakenförmigen Eingriffsabschnitt (26) umfasst, wobei der hakenförmige Eingriffsabschnitt (26) zum zumindest teilweisen Eingriff mit der Schlachtöffnung (13) ausgebildet und eingerichtet ist.

8. Vorrichtung (10) nach einem oder mehreren der Ansprüche 1 bis 7, **dadurch gekennzeichnet, dass** die Bearbeitungsstation (18) einen Führungsabschnitt (27) zum Führen und/oder Ausrichten der Geflügelschlachtkörper (11) umfasst, wobei der Führungsabschnitt (27) dem mindestens einen Eingriffselement (21) vorgelagert angeordnet ist.

9. Vorrichtung (10) nach einem oder mehreren der Ansprüche 1 bis 8, **dadurch gekennzeichnet, dass** der Bearbeitungsstation (18) eine Wägeeinrichtung zur Ermittlung der Gewichtskraft der Geflügelschlachtkörper (11) vorgelagert angeordnet ist, und die Wägeeinrichtung ausgebildet und eingerichtet ist, das vorbestimmte Drehmoment in Abhängigkeit der ermittelten Gewichtskraft automatisch einzustellen.

10. Vorrichtung (10) nach einem oder mehreren der Ansprüche 1 bis 9, **dadurch gekennzeichnet, dass** der Eingriffsgrundkörper (20) im Wesentlichen rotationssymmetrisch ausgebildet und eingerichtet ist, wobei eine Mehrzahl an Eingriffselementen (21) an dem Umfang des Eingriffsgrundkörpers (20) angeordnet sind, insbesondere drei bis neun Eingriffselemente (21).

11. Vorrichtung (10) nach einem oder mehreren der Ansprüche 1 bis 10, **dadurch gekennzeichnet, dass** die Schlachtöffnung (13) der Geflügelschlachtkörper (11) im Bereich der Kloake ausgebildet ist.

12. Verfahren zur Bearbeitung von Geflügelschlachtkörpern (11) oder Teilen davon mit einer zwischen den Beinen (12) befindlichen Schlachtöffnung (13), umfassend die Schritte:
- kontinuierliche Förderung der zu bearbeitenden Geflügelschlachtkörper (11) oder Teilen davon mittels einer Fördereinrichtung (14) entlang eines Transportpfads (16) in Transportrichtung T,
- Halten der Geflügelschlachtkörper (11) oder Teilen davon an den Beinen (12) während der Förderung entlang des Transportpfads (16) mittels mindestens einer an dem Transportförderer (15) angeordneten Haltevorrichtung (17),
- Führen der Geflügelschlachtkörper (11) in eine entlang des Transportpfads (16) im Bereich des Transportförderers (15) angeordnete Bearbeitungsstation (18),
- zumindest teilweiser Eingriff eines auf einer Drehachse (19) drehbar gelagerten und auf einem Eingriffsgrundkörper (20) angeordneten Eingriffselements (21) der Bearbeitungsstation (18) mit der Schlachtöffnung (13) des Geflügelschlachtkörpers (11),
- Weitung der Schlachtöffnung (13) unter Entstehung eines Drehmoments bei dem zumindest teilweisen Eingriff des mindestens einen Eingriffselements (21) mit dem Geflügelschlachtkörper (11) oder Teilen davon unter Beibehaltung der kontinuierlichen Förderung, und
- selbsttätiges Freigeben des Eingriffselements (21) aus der Schlachtöffnung (13) durch Rotation (R) des Eingriffsgrundkörpers (20) um die Drehachse (19) bei einem Überschreiten eines vorbestimmten Drehmoments auf das mindestens eine Eingriffselement (21).

13. Verfahren nach Anspruch 12, **gekennzeichnet durch** Einschneiden des Geflügelschlachtkörpers (11) oder Teile davon, insbesondere im Bereich der Schlachtöffnung (13), vor, während und/oder nach dem Eingriff des Eingriffselement (21) mit der Schlachtöffnung (13) mittels eines an dem Eingriffselement (21) angeordneten Schneidmittels (22).

14. Verfahren nach Anspruch 12 oder 13, **gekennzeichnet durch** Einstellen des vorbestimmten Drehmoments mittels eines mit dem Eingriffsgrundkörper (20) in Wirkverbindung stehenden Federelements (23) und/oder mittels einer mit der Drehachse (19) in Wirkverbindung stehenden Antriebseinheit.

15. Verfahren nach Anspruch 14, **gekennzeichnet durch** Einstellen eines definierten Verlaufs des vorbestimmten Drehmoments und Freigeben des Eingriffsgrundkörpers (20) mittels eines die Antriebseinheit umfassenden Stellantriebs.

16. Verfahren nach Anspruch 14, **gekennzeichnet durch** Einrichten einer Rotation (R) des Eingriffselements (21) um die Drehachse (19) mittels einer Kurvenscheibe (24) des Eingriffsgrundkörpers (20) bei Überschreiten des vorbestimmten Drehmoments auf das Eingriffselement (21), wobei die Kurvenscheibe (24) mit dem Federelement (23) in Wirkverbindung steht.

17. Verfahren nach Anspruch 16, **gekennzeichnet durch** Steuern der Rotation (R) des Eingriffsgrundkörpers (20) durch mindestens eine Umfangssteuerkurve (25) der Kurvenscheibe (24) mittels des Federelements (23) bei Eingriff des Eingriffselements (21) mit der Schlachtöffnung (13), wobei durch die Umfangssteuerkurve (25) die selbsttätige Rotation (R) des Eingriffsgrundkörpers (20) um die Drehachse nach dem Freigeben des Eingriffselements (21) aus der Schlachtöffnung (13) des Geflügelschlachtkörpers (11) beendet wird.

18. Verfahren nach einem oder mehreren der Ansprüche 12 bis 17, **gekennzeichnet durch** teilweisen Eingriff eines hakenförmigen Eingriffsabschnitts (26) des Eingriffselements (21) mit der Schlachtöffnung (13).

19. Verfahren nach einem oder mehreren der Ansprüche 12 bis 18, **gekennzeichnet durch** Führen und/oder Ausrichten der Geflügelschlachtkörper (11) durch einen Führungsabschnitt (27) der Bearbeitungsstation (18), wobei der Führungsabschnitt (27) dem mindestens einen Eingriffselement (21) vorgelagert angeordnet ist.

20. Verfahren nach einem oder mehreren der Ansprüche 12 bis 19, **gekennzeichnet durch** Ermittlung der Gewichtskraft der Geflügelschlachtkörper (11) mittels einer der Bearbeitungsstation (18) vorgelagert angeordneten Wägeeinrichtung, um mittels der Wägeeinrichtung das vorbestimmte Drehmoment in Abhängigkeit der ermittelten Gewichtskraft automatisch einzustellen.

## Claims

1. Apparatus (10) configured and adapted for processing poultry carcasses (11) or parts thereof with a slaughter opening (13) located between the legs (12), comprising
a conveying device (14) with a drivable transport conveyor (15) for continuously conveying the poultry carcasses (11) to be processed or parts thereof suspended by the legs (12) along a transport path (16) in the transport direction T, at least one holding apparatus (17) arranged on the transport conveyor (15) for holding the poultry carcasses (11) or parts thereof by the legs (12) during conveying along the transport path (16),
a processing station (18) arranged along the transport path (16) in the region of the transport conveyor (15), wherein the processing station (18) comprises an engagement basic body (20) rotatably mounted on a rotary axis (19) and at least one engagement element (21), and the at least one engagement element (21) is configured and adapted for at least partial engagement with the slaughter opening (13) of the poultry carcasses (11),
wherein during the at least partial engagement of the at least one engagement element (21) with the poultry carcass (11) or parts thereof a widening of the slaughter opening (13) is effected while maintaining the continuous conveyance of the poultry carcass (11) along the transport path (16) with the generation of a torque, and the engagement basic body (20) is configured and adapted for receiving the torque,
wherein, if the torque exceeds a predetermined torque, the engagement element (21) is automatically released from the slaughter opening (13) by rotation (R) of the engagement basic body (20) about the rotary axis (19).

2. Apparatus (10) according to claim 1, **characterised in that** the at least one engagement element (21) comprises at least one cutting means (22) configured and adapted to cut into the poultry carcass (11) or parts thereof before, during and/or after engagement of the engagement element (21) with the slaughter opening (13), in particular in the region of the slaughter opening (13).

3. Apparatus (10) according to claim 1 or 2, **characterised in that** the predetermined torque is configured and adapted to be adjustable by a spring element (23) being operatively connected to the engagement basic body (20) and/or that the predetermined torque is configured and adapted to be adjustable by a drive unit being operatively connected to the rotary axis (19).

4. Apparatus (10) according to claim 3, **characterised in that** the drive unit comprises an actuator, configured and adapted for setting a predefined course of the predetermined torque and for releasing the engagement basic body (20).

5. Apparatus (10) according to claim 3, **characterised in that** the engagement basic body (20) comprises a cam disc (24), the cam disc (24) being operatively connected to the spring element (23) and being configured to enable a rotation (R) of the engagement basic body (20) about the rotary axis (19) when the predetermined torque on the engagement element (21) is exceeded.

6. Apparatus (10) according to claim 5, **characterised in that** the cam disc (24) contains at least one circumferential control cam (25) which controls the rotation (R) of the engagement basic body (20) by the spring element (23) when the engagement element (21) engages with the slaughter opening (13), wherein the at least one circumferential control cam (25) is configured to terminate the automatic rotation (R) of the engagement basic body (20) about the rotary axis (19) after the engagement element (21) is released from the slaughter opening (13) of the poultry carcass (11).

7. Apparatus (10) according to one or more of claims 1 to 6, **characterised in that** the engagement element (21) comprises a hook-shaped engagement portion (26), wherein the hook-shaped engagement portion (26) is configured and adapted for at least partial engagement with the slaughter opening (13).

8. Apparatus (10) according to one or more of claims 1 to 7, **characterized in that** the processing station (18) comprises a guide section (27) for guiding and/or aligning the poultry carcasses (11), wherein the guide section (27) is arranged upstream of the at least one engagement element (21).

9. Apparatus (10) according to one or more of claims 1 to 8, **characterised in that** a weighing device for determining the weight of the poultry carcasses (11) is arranged upstream of the processing station (18), and the weighing device is configured and adapted to automatically set the predetermined torque according to the determined weight.

10. Apparatus (10) according to one or more of claims 1 to 9, **characterised in that** the engagement basic body (20) is configured and adapted to be substantially rotationally symmetrical, wherein a plurality of engagement elements (21) are arranged on the circumference of the engagement basic body (20), in particular three to nine engagement elements (21).

11. Apparatus (10) according to one or more of claims 1 to 10, **characterised in that** the slaughter opening (13) of the poultry carcasses (11) is located in the region of the cloaca.

12. Method for processing poultry carcasses (11) or parts thereof with a slaughter opening (13) located between the legs (12), comprising the steps:
- continuously conveying the poultry carcasses (11) or parts thereof to be processed by a conveying device (14) along a transport path (16) in the transport direction T,
- holding the poultry carcasses (11) or parts thereof by the legs (12) during conveying along the transport path (16) by at least one holding apparatus (17) arranged on the transport conveyor (15),
- guiding the poultry carcasses (11) into a processing station (18) arranged along the transport path (16) in the region of the transport conveyor (15),
- at least partial engagement of an engagement element (21) rotatably mounted on a rotary axis (19) and arranged on an engagement basic body (20) of the processing station (18) with the slaughter opening (13) of the poultry carcass (11),
- widening the slaughter opening (13) while generating a torque during the at least partial engagement of the at least one engagement element (21) with the poultry carcass (11) or parts thereof, while maintaining continuous conveying, and
- automatically releasing the engagement element (21) from the slaughter opening (13) by rotation (R) of the engagement basic body (20) about the rotary axis (19) when a predetermined torque on the at least one engagement element (21) is exceeded.

13. Method according to claim 12, **characterised by** cutting into the poultry carcass (11) or parts thereof, in particular in the region of the slaughter opening (13), before, during and/or after engagement of the engagement element (21) with the slaughter opening (13) by a cutting means (22) arranged on the engagement element (21).

14. Method according to claim 12 or 13, **characterised by** adjusting the predetermined torque by a spring element (23) operatively connected to the engagement basic body (20) and/or by a drive unit operatively connected to the rotary axis (19).

15. Method according to claim 14, **characterised by** setting a predefined course of the predetermined torque and releasing the engagement basic body (20) by means of an actuator comprising the drive unit.

16. Method according to claim 14, **characterised by** arranging a rotation (R) of the engagement element (21) about the rotary axis (19) by a cam disc (24) of the engagement basic body (20) when the predetermined torque is exceeded on the engagement element (21), wherein the cam disc (24) is operatively connected to the spring element (23).

17. Method according to claim 16, **characterised by** controlling the rotation (R) of the engagement basic body (20) by at least one circumferential control cam (25) of the cam disc (24) by the spring element (23) upon engagement of the engagement element (21) with the slaughter opening (13), wherein the automatic rotation (R) of the engagement basic body (20) about the rotary axis is terminated by the circumferential control cam (25) after the engagement element (21) is released from the slaughter opening (13) of the poultry carcass (11).

18. Method according to one or more of claims 12 to 17, **characterized by** partially engaging a hook-shaped engagement portion (26) of the engagement element (21) with the slaughter opening (13).

19. Method according to one or more of claims 12 to 18, **characterised by** guiding and/or aligning the poultry carcasses (11) through a guide section (27) of the processing station (18), wherein the guide section (27) is arranged upstream of the at least one engagement element (21).

20. Method according to one or more of claims 12 to 19, **characterised by** determining the weight of the poultry carcasses (11) by a weighing device arranged upstream of the processing station (18) to automatically set the predetermined torque by the weighing device according to the determined weight.

## Revendications

1. Dispositif (10), configuré et adapté pour le traitement de carcasses de volailles (11) ou de parties de celles-ci avec une ouverture d'abattage (13) se trouvant entre les pattes (12), comprenant
un appareil de convoyage (14) avec un convoyeur de transport (15) pouvant être entraîné pour le convoyage continu, suspendu aux pattes (12), des carcasses de volailles (11) à traiter ou de parties de celles-ci le long d'un chemin de transport (16) dans la direction de transport T, au moins un dispositif de maintien (17) agencé sur le convoyeur de transport (15) pour maintenir les carcasses de volailles (11) ou des parties de celles-ci par les pattes (12) pendant le convoyage le long du chemin de transport (16),
un poste de traitement (18) agencé le long du chemin de transport (16) dans la zone du convoyeur de transport (15), le poste de traitement (18) comprenant un corps de base d'engagement (20) monté de manière rotative sur un axe de rotation (19) avec au moins un élément d'engagement (21), et l'au moins un élément d'engagement (21) étant configuré et adapté pour s'engager au moins partiellement avec l'ouverture d'abattage (13) des carcasses de volailles (11),
lors de l'engagement au moins partiel de l'au moins un élément d'engagement (21) avec la carcasse de volaille (11) ou des parties de celle-ci, il se produisant un élargissement de l'ouverture d'abattage (13) en générant un couple de rotation, tout en conservant le convoyage continu de la carcasse de volaille (11) le long du chemin de transport (16), et le corps de base d'engagement (20) étant configuré et adapté pour recevoir le couple de rotation,
si le couple de rotation dépasse un couple de rotation prédéterminé, il se produisant un dégagement automatique de l'élément d'engagement (21) hors de l'ouverture d'abattage (13) par rotation (R) du corps de base d'engagement (20) autour de l'axe de rotation (19).

2. Dispositif (10) selon la revendication 1, **caractérisé en ce que** l'au moins un élément d'engagement (21) comprend au moins un moyen de coupe (22), configuré et adapté pour inciser la carcasse de volaille (11) ou des parties de celle-ci avant, pendant et/ou après l'engagement de l'élément d'engagement (21) avec l'ouverture d'abattage (13), notamment dans la zone de l'ouverture d'abattage (13).

3. Dispositif (10) selon la revendication 1 ou 2, **caractérisé en ce que** le couple de rotation prédéterminé est configuré et adapté sous forme réglable au moyen d'un élément à ressort (23) en liaison active avec le corps de base d'engagement (20) et/ou **en ce que** le couple de rotation prédéterminé est configuré et adapté sous forme réglable au moyen d'une unité d'entraînement en liaison active avec l'axe de rotation (19).

4. Dispositif (10) selon la revendication 3, **caractérisé en ce que** l'unité d'entraînement comprend un actionneur, configuré et adapté pour régler une évolution définie du couple de rotation prédéterminé et pour dégager le corps de base d'engagement (20).

5. Dispositif (10) selon la revendication 3, **caractérisé en ce que** le corps de base d'engagement (20) comprend une came (24), la came (24) étant en liaison active avec l'élément à ressort (23) et étant configurée pour dégager une rotation (R) du corps de base d'engagement (20) autour de l'axe de rotation (19) lors du dépassement du couple de rotation prédéterminé sur l'élément d'engagement (21).

6. Dispositif (10) selon la revendication 5, **caractérisé en ce que** la came (24) présente au moins une courbe de commande périphérique (25) qui commande, au moyen de l'élément à ressort (23), la rotation (R) du corps de base d'engagement (20) lors de l'engagement de l'élément d'engagement (21) avec l'ouverture d'abattage (13), l'au moins une courbe de commande périphérique (25) étant configurée pour mettre fin à la rotation automatique (R) du corps de base d'engagement (20) autour de l'axe de rotation (19) après le dégagement de l'élément d'engagement (21) hors de l'ouverture d'abattage (13) de la carcasse de volaille (11).

7. Dispositif (10) selon une ou plusieurs des revendications 1 à 6, **caractérisé en ce que** l'élément d'engagement (21) comprend une section d'engagement en forme de crochet (26), la section d'engagement en forme de crochet (26) étant configurée et adaptée pour s'engager au moins partiellement dans l'ouverture d'abattage (13).

8. Dispositif (10) selon une ou plusieurs des revendications 1 à 7, **caractérisé en ce que** le poste de traitement (18) comprend une section de guidage (27) pour guider et/ou orienter les carcasses de volailles (11), la section de guidage (27) étant agencée en amont de l'au moins un élément d'engagement (21).

9. Dispositif (10) selon une ou plusieurs des revendications 1 à 8, **caractérisé en ce qu'**un appareil de pesage est agencé en amont du poste de traitement (18) pour déterminer le poids des carcasses de volailles (11), et l'appareil de pesage est configuré et adapté pour régler automatiquement le couple de rotation prédéterminé en fonction du poids déterminé.

10. Dispositif (10) selon une ou plusieurs des revendications 1 à 9, **caractérisé en ce que** le corps de base d'engagement (20) est configuré et adapté essentiellement à symétrie de révolution, une pluralité d'éléments d'engagement (21) étant agencés sur la périphérie du corps de base d'engagement (20), notamment trois à neuf éléments d'engagement (21).

11. Dispositif (10) selon une ou plusieurs des revendications 1 à 10, **caractérisé en ce que** l'ouverture d'abattage (13) des carcasses de volailles (11) est configurée dans la zone du cloaque.

12. Procédé de traitement de carcasses de volailles (11) ou de parties de celles-ci avec une ouverture d'abattage (13) se trouvant entre les pattes (12), comprenant les étapes suivantes :
- le convoyage continu des carcasses de volailles (11) ou de parties de celles-ci à traiter au moyen d'un appareil de convoyage (14) le long d'un chemin de transport (16) dans la direction de transport T,
- le maintien des carcasses de volailles (11) ou de parties de celles-ci par les pattes (12) pendant le convoyage le long du chemin de transport (16) au moyen d'au moins un dispositif de maintien (17) agencé sur le convoyeur de transport (15),
- le guidage des carcasses de volailles (11) dans un poste de traitement (18) agencé le long du chemin de transport (16) dans la zone du convoyeur de transport (15),
- l'engagement au moins partiel d'un élément d'engagement (21) du poste de traitement (18), monté de manière rotative sur un axe de rotation (19) et agencé sur un corps de base d'engagement (20), avec l'ouverture d'abattage (13) de la carcasse de volaille (11),
- l'élargissement de l'ouverture d'abattage (13) en générant un couple de rotation lors de l'engagement au moins partiel de l'au moins un élément d'engagement (21) avec la carcasse de volaille (11) ou des parties de celle-ci tout en conservant le convoyage continu, et
- le dégagement automatique de l'élément d'engagement (21) hors de l'ouverture d'abattage (13) par rotation (R) du corps de base d'engagement (20) autour de l'axe de rotation (19) lors d'un dépassement d'un couple de rotation prédéterminé sur l'au moins un élément d'engagement (21).

13. Procédé selon la revendication 12, **caractérisé par** l'incision de la carcasse de volaille (11) ou de parties de celle-ci, notamment dans la zone de l'ouverture d'abattage (13), avant, pendant et/ou après l'engagement de l'élément d'engagement (21) avec l'ouverture d'abattage (13) au moyen d'un moyen de coupe (22) agencé sur l'élément d'engagement (21).

14. Procédé selon la revendication 12 ou 13, **caractérisé par** le réglage du couple de rotation prédéterminé au moyen d'un élément à ressort (23) en liaison active avec le corps de base d'engagement (20) et/ou au moyen d'une unité d'entraînement en liaison active avec l'axe de rotation (19).

15. Procédé selon la revendication 14, **caractérisé par** le réglage d'une évolution définie du couple de rotation prédéterminé et le dégagement du corps de base d'engagement (20) au moyen d'un actionneur comprenant l'unité d'entraînement.

16. Procédé selon la revendication 14, **caractérisé par** l'établissement d'une rotation (R) de l'élément d'engagement (21) autour de l'axe de rotation (19) au moyen d'une came (24) du corps de base d'engagement (20) lors du dépassement du couple de rotation prédéterminé sur l'élément d'engagement (21), la came (24) étant en liaison active avec l'élément à ressort (23).

17. Procédé selon la revendication 16, **caractérisé par** la commande de la rotation (R) du corps de base d'engagement (20) par au moins une courbe de commande périphérique (25) de la came (24) au moyen de l'élément à ressort (23) lors de l'engagement de l'élément d'engagement (21) avec l'ouverture d'abattage (13), la courbe de commande périphérique (25) mettant fin à la rotation automatique (R) du corps de base d'engagement (20) autour de l'axe de rotation après le dégagement de l'élément d'engagement (21) hors de l'ouverture d'abattage (13) de la carcasse de volaille (11).

18. Procédé selon une ou plusieurs des revendications 12 à 17, **caractérisé par** l'engagement partiel d'une section d'engagement en forme de crochet (26) de l'élément d'engagement (21) avec l'ouverture d'abattage (13).

19. Procédé selon une ou plusieurs des revendications 12 à 18, **caractérisé par** le guidage et/ou l'orientation des carcasses de volailles (11) par une section de guidage (27) du poste de traitement (18), la section de guidage (27) étant agencée en amont de l'au moins un élément d'engagement (21).

20. Procédé selon une ou plusieurs des revendications 12 à 19, **caractérisé par** la détermination du poids des carcasses de volailles (11) au moyen d'un appareil de pesage agencé en amont du poste de traitement (18), afin de régler automatiquement le couple de rotation prédéterminé en fonction du poids déterminé au moyen de l'appareil de pesage.
